(19) Europäisches Patentamt / European Patent Office / Office européen des brevets

(11) **EP 3 000 004 B1**

(12) **EUROPÄISCHE PATENTSCHRIFT**

(45) Veröffentlichungstag und Bekanntmachung des Hinweises auf die Patenterteilung:
**25.03.2020   Patentblatt 2020/13**

(51) Int Cl.:
**G05B 19/418** *(2006.01)*  **G06Q 10/00** *(2012.01)*
**G06Q 50/04** *(2012.01)*  **G06Q 10/06** *(2012.01)*

(21) Anmeldenummer: **14758798.4**

(22) Anmeldetag: **19.08.2014**

(86) Internationale Anmeldenummer:
**PCT/EP2014/067611**

(87) Internationale Veröffentlichungsnummer:
**WO 2015/024920 (26.02.2015 Gazette 2015/08)**

(54) **VORRICHTUNG UND VERFAHREN ZUM BETREIBEN EINES TECHNISCHEN SYSTEMS SOWIE VERFAHREN ZUR HERSTELLUNG EINES TECHNISCHEN SYSTEMS**

DEVICE AND METHOD FOR OPERATING A TECHNICAL SYSTEM AND METHOD FOR PRODUCING A TECHNICAL SYSTEM

DISPOSITIF ET PROCÉDÉ POUR FAIRE FONCTIONNER UN SYSTÈME TECHNIQUE ET PROCÉDÉ DE FABRICATION D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2013   DE 102013216799**

(43) Veröffentlichungstag der Anmeldung:
**30.03.2016   Patentblatt 2016/13**

(73) Patentinhaber: **Siemens Aktiengesellschaft 80333 München (DE)**

(72) Erfinder:
• **CREUTZNACHER, Thomas 90478 Nürnberg (DE)**
• **HEINECKE, Georg 39345 Flechtingen (DE)**
• **LAMPARTER, Steffen 85622 Feldkirchen (DE)**
• **LEPRATTI, Raffaello 90409 Nürnberg (DE)**

(56) Entgegenhaltungen:
DE-A1-102012 006 163     US-A1- 2010 274 377

• SUMIT, M. ET AL.: "Optimal production planning under time-sensitive electricity prices for continuous power-intensive processes", COMPUTERS AND CHEMICAL ENGINEERING, Nr. 38, 26. Oktober 2011 (2011-10-26), Seiten 171-184, XP002734503, DOI: 10.1016/j.compchemeng.2011.09.019

EP 3 000 004 B1

**Beschreibung**

Die vorliegende Erfindung betrifft eine Vorrichtung und ein Verfahren zum Betreiben eines technischen Systems. Ferner betrifft die Erfindung ein Produktionssystem mit einer solchen Vorrichtung. Des Weiteren betriff die Erfindung ein Verfahren zur Herstellung eines technischen Systems.

In vielen technischen Systemen, wie beispielsweise Produktionsanlagen, sind Nachhaltigkeit und Energieeffizienz ebenso wie deren Produktivität von zunehmender Bedeutung. So tritt beispielsweise in besonders hochautomatisierten Bereichen der Automobilindustrie, wie zum Beispiel im Karosserierohbau, aufgrund der hohen Anzahl von Industrierobotern ein besonders hoher Stromverbrauch auf. Den Stromverbrauch, unter anderem aufgrund immer höherer Strompreise, zu verringern, findet daher bei der Planung neuer Anlagen erhöhte Beachtung. Insbesondere die Reduzierung von unnötigen Stromverbräuchen hat innerhalb von Produktionsbereiche mit geringer menschlicher Beteiligung am Produktionsprozess ein hohes Potential.

Die Auslegung und Optimierung von Produktionsanlagen und Produktionsprozessen in Hinsicht auf Energieverbrauch, d.h. die durchschnittlich verwendete bzw. verbrauchte Energie, bzw. Energieeffizienz, d.h. das Maß für den Energieaufwand zur Erreichung eines festgelegten Nutzens, wird in bisherigen Systemen nur in deren Planungsphase durch Werkzeuge des sogenannten Product Life Cycle Managements (PLM) vorgenommen. Dynamische Einflüsse auf den Energieverbrauch der einzelnen Elemente oder Module einer Produktionsanlage, die während der Laufzeit auftreten, werden dabei nicht berücksichtigt. Da diese dynamischen Einflüsse erst zur Laufzeit auftreten, d.h. während des Betriebs der Produktionsanlage, sind sie nicht oder zumindest nur bedingt planbar. Hierbei handelt es sich einerseits um den kurzfristig schwankenden Energieverbrauch, der aufgrund komplexer Zusammenhänge in der Fabrik nicht vorhersagbar ist, und andererseits um äußere Einflüsse, wie beispielsweise schwankende Strompreise in einem Stromnetz.

Aus diesen Gründen sollten Energieverbrauch und Energieeffizienz auch während der Laufzeit in der Produktions- und Auftragssteuerung berücksichtigt werden. Existierende Herstellungsausführungssysteme (Manufacturing Execution Systems, MES) sind dafür aber nicht ausgelegt, sondern optimieren bisher nur nach der sogenannte Overall Equipment Effectiveness (OEE), das heißt die gesamte Effektivität der Produktionsanlage, die sich aus Verfügbarkeit, Leistung und Qualität zusammensetzt. Energieverbrauch bzw. Energiepreise werden dabei jedoch nicht berücksichtigt. Des Weiteren sind existierende Fertigungsprozesse zu unflexibel, um auf kurzfristige dynamische Einflüsse reagieren zu können, da sie nur einmalig innerhalb des PLM geplant werden und dann während der Laufzeit immer auf die gleiche Art und Weise ausgeführt werden.

Um den Energieverbrauch in Produktionsanlagen, wie beispielsweise in der Automobilindustrie, bei unveränderter Produktionsleistung zu vermindern, wird bislang innerhalb von Planungssystemen des PLM die Energieeffizienz der Produktionsanlage berücksichtigt. So behandelt beispielsweise Wagner, E., 2012, Vorhersageschafteinsparungen, KEM, August- Edition, die Vorhersage und die Optimierung des Energieverbrauchs mit Hilfe von PLM-Tools. Dabei werden auf Anlagenebene Optimierungen mittels Materialflusssimulationen durchgeführt, die um den Aspekt der Energieeffizienz ergänzt wurden. Des Weiteren ermöglichen statische Optimierungen auf Maschinen- und Prozessebene ebenfalls mit Hilfe von Planungstools Einsparungen des Energieverbrauchs.

Der Energieverbrauch bzw. die Energieeffizienz in der Produktions- und Auftragssteuerung wird allerdings nicht dynamisch während der Laufzeit, das heißt der Run-Time bzw. dem wertschöpfenden Betrieb, der Produktionsanlage berücksichtigt.

Eine solche dynamische Berücksichtigung der Energieeffizienz wird jedoch benötigt, um nicht nur auf Planungsebene, sondern auch während der Laufzeit, das heißt des tatsächlichen Betriebs zur Produktion, der Produktionsanlage, die Energieeffizienz zu verbessern.

Das Dokument US 2010/274377 A1 beschreibt einen Herstellungsprozess zur Herstellung eines technischen Systems, welcher unter Verwendung eines mathematischen Modells angepasst werden kann. Das mathematische Modell berücksichtigt dabei unter anderem die verwendete oder verfügbare Energie.

Vor diesem Hintergrund besteht eine Aufgabe der vorliegenden Erfindung darin, eine dynamische Berücksichtigung verschiedener Parameter einer Produktionsanlage vorzusehen, um die Energieeffizienz während der Laufzeit der Produktionsanlage zu verbessern.

Demgemäß wird ein Herstellungsverfahren zum Herstellen eines technischen Systems vorgeschlagen. Das technische System weist hierbei eine Mehrzahl von Untersystemen mit jeweils zumindest einem Modul auf. Das Herstellungsverfahren weist die folgenden Schritte auf: Ermitteln einer Mehrzahl von durchschnittlichen Energiebedarfsmengen jedes Untersystems, wobei jede der Mehrzahl von durchschnittlichen Energiebedarfsmengen vordefinierten Taktzyklen des zumindest einen Moduls während der Laufzeit des technischen Systems entspricht, Ermitteln einer Mehrzahl von Betriebszuständen für jedes der Mehrzahl von Untersystemen unter Berücksichtigung von Einstellmöglichkeiten der Module jedes Untersystems, wobei jeder Betriebszustand einen der vordefinierten Taktzyklen des zumindest einen Moduls und ein Steuerprogramm für das zumindest eine Modul festlegt, und Speichern der ermittelten Mehrzahl von Betriebszuständen zusammen mit der jeweiligen Energiebedarfsmenge für jedes Untersystem, wobei jeder der Betriebszustände während der Laufzeit des technischen Systems basierend auf zumindest einem Parameter auswählbar ist, wobei der zumindest eine Parameter zu zumindest einem von einer Eigenschaft der gespeicherten Betriebszustände und von der Energiebedarfsmenge korrespondiert.

Weiterhin weist das Herstellungsverfahren das Einrichten des technischen Systems basierend auf der Mehrzahl von ermittelten Betriebszuständen auf, wobei einer der Mehrzahl von ermittelten Betriebszuständen als Standard-Betriebszustand eingerichtet ist.

Technische Systeme oder Produktionsanlagen weisen üblicherweise eine Mehrzahl von Untersystemen bzw. Fertigungslinien auf. Jede Fertigungslinie weist mindestens ein Modul bzw. eine Maschine auf. Solche Maschinen können beispielsweise Roboter sein. Während der Planungsphase des technischen Systems werden für jedes Untersystem durchschnittliche Energiebedarfsmengen ermittelt. Energiebedarfsmenge in diesem Zusammenhang bedeutet die Menge an elektrischer Energie, die von einem Untersystem durchschnittlich verbraucht wird. Bei der Ermittlung der durchschnittlichen Energiebedarfsmenge wird diese für vordefinierte Taktzyklen der einzelnen Module berechnet bzw. bestimmt. Ein Taktzyklus definiert hierbei die Dauer einer bestimmten Handlung des Moduls, wobei durch Handlungen der Module Energie verbraucht wird. Beispielsweise kann es sich hierbei um die Bewegung eines Roboterarms handeln. Ein Taktzyklus definiert dabei auch die Verfahrgeschwindigkeit eines Moduls. Eine höhere Verfahrgeschwindigkeit führt zu einem kürzeren Taktzyklus, eine niedrigere Verfahrgeschwindigkeit zu einem längeren Taktzyklus.

Basierend auf der ermittelten Energiebedarfsmenge sowie den zugehörigen vordefinierten Taktzyklen wird eine Mehrzahl von Betriebszuständen für jedes der Mehrzahl von Untersystemen ermittelt. Jeder Betriebszustand definiert hierbei einen der vordefinierten Taktzyklen des zumindest einen Moduls sowie ein zugehöriges Steuerprogramm für das zumindest eine Modul. Jeder Betriebszustand legt also die Vorgänge innerhalb eines Untersystems fest.

Die ermittelte Mehrzahl von Betriebszuständen kann dann zusammen mit der Energiebedarfsmenge pro Betriebszustand bzw. zugehörigem Steuerprogramm gespeichert werden. Während der Laufzeit, das heißt der Run-Time, des technischen Systems kann dann jeweils ein Betriebszustand basierend auf einem Parameter ausgewählt werden, wobei dieser Parameter zu zumindest einer Eigenschaft der gespeicherten Betriebszustände oder der Energiebedarfsmenge korrespondiert.

Um die Energiebedarfsmenge zu ermitteln, werden Messungen auf Maschinenebene durchgeführt, um ein Energie-Monitoring zu ermöglichen. Hierzu werden beispielsweise herkömmliche Messgeräte oder geeignete Sensorik verwendet, die eine zeitliche Dokumentation des Energieverbrauchs eines Untersystems oder des gesamten technischen Systems bereitstellen. Alternativ sind auch repräsentative Messungen vor der Inbetriebnahme oder die Vorhersage durch Bewegungssimulationen der Module möglich.

Die möglichen Betriebszustände werden hierbei unter Berücksichtigung der Einstellmöglichkeiten bzw. der möglichen Verfahrgeschwindigkeiten der verschiedenen Module pro Untersystem ermittelt. Das bedeutet, dass nicht jede Verfahrgeschwindigkeit eines Moduls im Zusammenhang mit allen Verfahrgeschwindigkeiten der anderen Module des gleichen Untersystems möglich ist. Die ermittelten abzuspeichernden Betriebszustände dürfen daher nur Taktzyklen für die einzelnen Module eines Untersystems und korrespondierende Steuerprogramme aufweisen, die auch miteinander arbeiten und funktionieren können.

In bestehenden technischen Systemen werden bislang Lastspitzen vermieden oder Leerlaufverluste reduziert, allerdings keine dynamische Anpassung während der Laufzeit des technischen Systems ermöglicht. Um den Energieverbrauch zu reduzieren, können bestehende Anlagen beispielsweise in nicht produktiven Phasen, das heißt während keine Produkte erzeugt werden, abgeschaltet werden. Dies führt jedoch wiederum zu Problemen, da komplexe technische Systeme nicht ohne weiteres wieder gestartet werden können.

Durch das hier vorgeschlagene Verfahren ist jedoch eine dynamische Anpassung des technischen Systems während der Laufzeit möglich, da das technische System basierend auf Eingangsparametern wie beispielsweise einem Strompreis angepasst werden kann. Auf diese Weise sind geschwindigkeitsadaptive Fertigungsprozesse möglich.

Um die Inbetriebnahme des technischen Systems zu vereinfachen, kann einer der ermittelten Betriebszustände als Standard-Betriebszustand default-mäßig eingestellt sein. Auf diese Weise kann auch ohne Eingeben von aktuellen Werten für die Parameter das technische System basierend auf diesem Default-Betriebszustand betrieben werden. Beispielsweise kann dieser Betriebszustand einer Verfahrgeschwindigkeit von 100 % der einzelnen Module des entsprechenden Untersystems entsprechen.

Im Folgenden werden Ausführungsformen des Herstellungsverfahrens näher erläutert.

Gemäß einer Ausführungsform weist das Ermitteln einer Mehrzahl von durchschnittlichen Energiebedarfsmengen jedes Untersystems das Ermitteln einer Mehrzahl von durchschnittlichen Energiebedarfsmengen jedes des zumindest einen Moduls für einen vordefinierten Taktzyklus und das Summieren der Energiebedarfsmenge jedes des zumindest einen Moduls pro Untersystem auf.

Die Energiebedarfsmenge eines Untersystems bzw. einer Fertigungslinie bestimmt sich durch die Energiebedarfsmenge jedes Moduls dieser Fertigungslinie. Um somit die durchschnittliche Energiebedarfsmenge eines Untersystems zu bestimmen, wird zunächst die Energiebedarfsmenge bestimmt, die jedes Modul des Untersystems für einen vordefinierten Taktzyklus benötigt, und anschließend die Energiebedarfsmenge jedes Moduls pro Untersystem summiert. Hierbei werden verschiedene vordefinierte Taktzyklen der Module verwendet. Die vordefinierten Taktzyklen unterscheiden sich hierbei durch die Geschwindigkeit der Module. Unter Geschwindigkeit wird hierbei die Verfahrgeschwindigkeit eines Moduls bzw. eine Maschine bezeichnet, die im wertschöpfenden Betrieb verwendet wird.

Gemäß einer weiteren Ausführungsform weisen die Eigenschaften der gespeicherten Betriebszustände zumindest eines von einer Gesamtbetriebsgeschwindigkeit jedes Untersystems, einer Gesamtgeschwindigkeit des technischen Systems und einem zu produzierenden Produkt auf.

Jeder Betriebszustand definiert eine Gesamtbetriebsgeschwindigkeit jedes Untersystems, das heißt eine Zeitdauer, die jedes Untersystem benötigt, um den Produktionsschritt in diesem Untersystem fertig zu stellen. Des Weiteren können die Eigenschaften der gespeicherten Betriebszustände eine Gesamtgeschwindigkeit des technischen Systems aufweisen. Die Gesamtgeschwindigkeit des technischen Systems definiert, wie lange es dauert, bis ein Produkt innerhalb des technischen Systems fertiggestellt wird, wobei dies von Betriebszustand zu Betriebszustand variiert. Des Weiteren können die Eigenschaften das zu produzierende Produkt definieren. Je nach Art des Produktes können sich die Gesamtbetriebsgeschwindigkeit jedes Untersystems sowie die Gesamtgeschwindigkeit des technischen Systems unterscheiden. Je nach produziertem Produkt variieren auch die Betriebszustände bzw. die darin enthaltenen Steuerprogramme für die einzelnen Module.

Gemäß einer weiteren Ausführungsform weisen die Eigenschaften der Energiebedarfsmenge zumindest eines von einem Gesamtenergieverbrauch jedes Untersystems pro Taktzyklus und aktuelle Energiekosten auf.

Somit kann anhand eines gewünschten Gesamtenergieverbrauchs von jedem Untersystem pro Taktzyklus oder mit Hilfe von aktuellen Energiekosten ein geeigneter Betriebszustand ausgewählt werden.

Gemäß einer weiteren Ausführungsform wird die ermittelte Mehrzahl von Betriebszuständen zusammen mit der jeweiligen Energiebedarfsmenge für jedes Untersystem in einer Speichervorrichtung des technischen Systems gespeichert.

Vor Betrieb des technischen Systems werden somit verschiedene Möglichkeiten der Betriebszustände ermittelt und gespeichert, die dann während des Betriebs dynamisch anhand von verschiedenen Eigenschaften oder gewünschten Zielen ausgewählt werden können. Die Mehrzahl von Betriebszuständen kann beispielsweise in einer Lookup-Table gespeichert sein.

Gemäß einem weiteren Aspekt wird ein Verfahren zum Betreiben eines technischen Systems vorgeschlagen. Das technische System weist eine Mehrzahl von Untersystemen mit jeweils zumindest einem Modul auf, wobei eine Mehrzahl von Betriebszuständen zusammen mit einer jeweiligen Energiebedarfsmenge für jedes Untersystem in dem technischen System gespeichert ist, wobei jeder der Betriebszustände während der Laufzeit des technischen Systems basierend auf zumindest einem Parameter auswählbar ist, wobei der zumindest eine Parameter zu zumindest einem von einer Eigenschaft der gespeicherten Betriebszustände und von der Energiebedarfsmenge korrespondiert. Das Verfahren weist die Schritte auf: Empfangen eines aktuellen Werts für den zumindest einen Parameter, Auswählen eines der gespeicherten Betriebszustände für jedes Untersystem basierend auf dem aktuellen Wert für den zumindest einen Parameter, wobei der ausgewählte Betriebszustand für jedes der Mehrzahl von Untersystemen einen vordefinierten Taktzyklus des zumindest einen Moduls und ein Steuerprogramm für das zumindest eine Modul festlegt und unter Berücksichtigung von Einstellmöglichkeiten der Module jedes Untersystems ermittelt wurde, und Einstellen der Mehrzahl von Untersystemen basierend auf den ausgewählten Betriebszuständen, wobei einer der Mehrzahl von gespeicherten Betriebszuständen als Standardbetriebszustand eingestellt ist.

Gemäß einem weiteren Aspekt wird eine Steuerungsvorrichtung zum Betreiben eines technischen Systems vorgeschlagen, wobei das technische System eine Mehrzahl von Untersystemen mit jeweils zumindest einem Modul aufweist. Eine Mehrzahl von Betriebszuständen ist dabei zusammen mit einer jeweiligen Energiebedarfsmenge für jedes Untersystem in dem technischen System gespeichert, wobei jeder der Betriebszustände während der Laufzeit des technischen Systems basierend auf zumindest einem Parameter auswählbar ist, wobei der zumindest eine Parameter zu zumindest einem von einer Eigenschaft der gespeicherten Betriebszustände und von der Energiebedarfsmenge korrespondiert. Die Steuerungsvorrichtung weist eine Empfangseinheit zum Empfangen eines aktuellen Werts für den zumindest einen Parameter, eine Auswahleinheit zum Auswählen eines der gespeicherten Betriebszustände für jedes Untersystem basierend auf dem aktuellen Wert für den zumindest einen Parameter, wobei der ausgewählte Betriebszustand für jedes der Mehrzahl von Untersystemen einen vordefinierten Taktzyklus des zumindest einen Moduls und ein Steuerprogramm für das zumindest eine Modul festlegt und unter Berücksichtigung von Einstellmöglichkeiten der Module jedes Untersystems ermittelt wurde, und eine Einstelleinheit zum Einstellen der Mehrzahl von Untersystemen basierend auf den ausgewählten Betriebszuständen auf, wobei einer der Mehrzahl von gespeicherten Betriebszuständen als Standardbetriebszustand eingestellt ist.

Die Mehrzahl von Betriebszuständen, die nach dem oben beschriebenen Verfahren ermittelt wurden, sind in dem technischen System gespeichert, und werden zum Betreiben des technischen Systems verwendet. Hierbei wird basierend auf aktuellen Werten ein Betriebszustand ausgewählt, und die Untersysteme basierend auf diesem ausgewählten Betriebszustand eingestellt. Hierbei können auch mehrere Betriebszustände für verschiedene Untersysteme ausgewählt werden. Der aktuelle Wert kann in Abhängigkeit von dem zu erreichenden Ziel ausgewählt sein.

Im Folgenden werden Ausführungsformen des Verfahrens zum Betreiben eines technischen Systems und der Steuervorrichtung näher erläutert.

Gemäß einer Ausführungsform weist das Empfangen eines aktuellen Werts für den zumindest einen Parameter das Ermitteln einer Zielfunktion auf, wobei die Zielfunktion eine zu erreichende Eigenschaft des entsprechenden Untersystems definiert.

Die Zielfunktion kann einen Algorithmus definieren, durch den die nötigen Einstellungen für eine zu erreichende Eigenschaft des entsprechenden Untersystems bestimmt werden können. Je nach zu erreichender Eigenschaft können sich die Zielfunktion und der damit verbundene Algorithmus unterscheiden. Des Weiteren können dadurch auch der Parameter und der damit verbundene aktuelle Wert variieren.

Gemäß einer Ausführungsform weist die zu erreichende Eigenschaft zumindest eines von einer Betriebsgeschwindigkeit, einem Gesamtenergieverbrauch und Gesamtenergiekosten des jeweiligen Untersystems auf.

Die zu erreichenden Ziele bzw. Eigenschaften können je nach aktuellem Anlass unterschiedlich sein. In manchen Fällen kann es wünschenswert sein, die Betriebsgeschwindigkeit eines Untersystems anzupassen oder die Gesamtgeschwindigkeit des technischen Systems zu optimieren. In anderen Fällen kann es wünschenswert sein, den Gesamtenergieverbrauch zu reduzieren und die Gesamtenergiekosten pro Untersystem oder für das gesamte technische System zu reduzieren. In anderen Fällen wiederum kann eine Optimierung der Betriebsgeschwindigkeit in Bezug auf den gesamten Energieverbrauch wünschenswert sein.

Gemäß einer weiteren Ausführungsform weist das Auswählen eines der gespeicherten Betriebszustände für jedes Untersystem basierend auf dem aktuellen Wert für den zumindest einen Parameter das Ermitteln eines der gespeicherten Betriebszustände für jedes Untersystem basierend auf dem aktuellen Wert für den zumindest einen Parameter und der ermittelten Zielfunktion auf.

Gemäß dieser Ausführungsform wird, bevor einer der gespeicherten Betriebszustände ausgewählt wird, der passende Betriebszustand basierend auf dem aktuellen Wert und der ermittelten, für diesen Fall passenden, Zielfunktion ermittelt. Dies kann beispielsweise durch eine Optimierungsfunktion mit Hilfe der Zielfunktion durchgeführt werden. Hierbei können verschiedene Algorithmen eingesetzt werden. Beispielsweise ist es möglich, eine Fuzzylogik in dem technischen System vorzusehen, um ein zu erreichendes Ziel zu definieren.

Gemäß einer weiteren Ausführungsform definiert die Zielfunktion eine zu erreichende Eigenschaft des gesamten technischen Systems.

Die Zielfunktion kann also nicht nur zu erreichende Eigenschaften der einzelnen Untersysteme, sondern auch eine zu erreichende Eigenschaften des gesamten technischen Systems definieren. Hierzu zählen beispielsweise die Gesamtenergieeffizienz oder die Gesamtgeschwindigkeit des technischen Systems.

Die für die vorgeschlagenen Verfahren beschriebenen Ausführungsformen und Merkmale gelten für die vorgeschlagene Vorrichtung entsprechend.

Gemäß einem weiteren Aspekt wird ein Produktionssystem vorgeschlagen, welches ein technisches System mit einer Mehrzahl von Untersystemen mit jeweils zumindest einem Modul und eine Steuerungsvorrichtung mit den oben beschriebenen Merkmalen aufweist.

Ein solches Produktionssystem kann gemäß einer weiteren Ausführungsform beispielsweise ein Automobilproduktionssystem sein. Auch andere Arten von Produktionssystemen sind möglich, in denen eine dynamische Anpassung der Verfahrgeschwindigkeiten bzw. der Bewegungsabläufe im Zusammenhang mit dem damit verbundenen Energieverbrauch wünschenswert ist.

Weiterhin wird ein Computerprogrammprodukt vorgeschlagen, welches auf einer programmgesteuerten Einrichtung die Durchführung der wie oben erläuterten Verfahren veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1    zeigt ein Verfahren zum Herstellen eines technischen Systems;

Fig. 2    zeigt ein Verfahren zum Betreiben eines technischen Systems;

Fig. 3    zeigt eine Steuerungsvorrichtung sowie ein technisches System;

Fig. 4    zeigt eine Ausführungsform eines technischen Systems;

Fig. 5    zeigt ein Diagramm, um den Energieverbrauch und die Leistung in Abhängigkeit von der Betriebsgeschwindigkeit zu veranschaulichen;

Fig. 6    zeigt einen Überblick über die Herstellung und den betrieb eines technischen Systems;

Fig. 7    zeigt mögliche Betriebszustände in Zusammenhang mit dem Energieverbrauch und dem Taktzyklus; und

Fig. 8    zeigt ein Diagramm, um ein Beispiel für einen schwankenden Strompreis über die Zeit zu veranschaulichen.

In den Figuren sind gleiche oder funktionsgleiche Elemente mit denselben Bezugszeichen versehen worden, sofern nichts anderes angegeben ist.

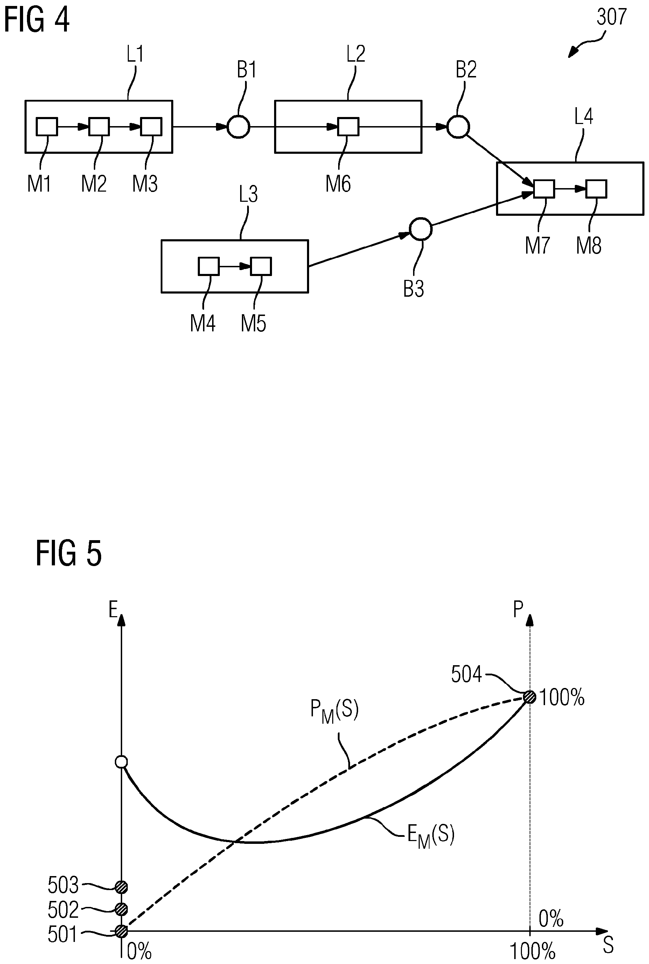

Ein beispielhaftes Produktionssystem 307 ist in Fig. 4 gezeigt. Ein solches Produktionssystem kann aus mehreren Untersystemen bzw. Fertigungslinien L1-L4 bestehen. Diese können nacheinander, wie L1-L2-L4 oder L3-L4, angeordnet sein oder parallel laufen, wie L1-L2 und L3. In jeder Fertigungslinie L1-L4 werden verschiedene Teilschritte des gesamten Produktionsprozesses durchgeführt. Hierzu kann wiederum jede Fertigungslinie L1-L4 ein oder mehrere Module M1-M8 aufweisen. Diese Module M1-M8 stellen Maschinen, wie beispielsweise Roboter, dar. Da die einzelnen Fertigungslinien L1-L4 unterschiedlich lange zur Fertigstellung des in ihnen durchgeführten Produktionsschrittes benötigen können, sind zwischen den einzelnen Fertigungslinien L1-L4 Puffer bzw. Zwischenspeicher B1-B3 angeordnet. In diesen Zwischenspeichern B1-B3, die Parkpositionen in der Produktionsanlage 307 darstellen können, können die zu erzeugenden Produkte nach Durchlaufen einer Fertigungslinie L1-L4 geparkt werden, bevor sie in der nächsten Fertigungslinie L1-L4 weiterverarbeitet werden. Auf diese Weise können Leerlaufzeiten der Fertigungslinien L1-L4 verringert werden.

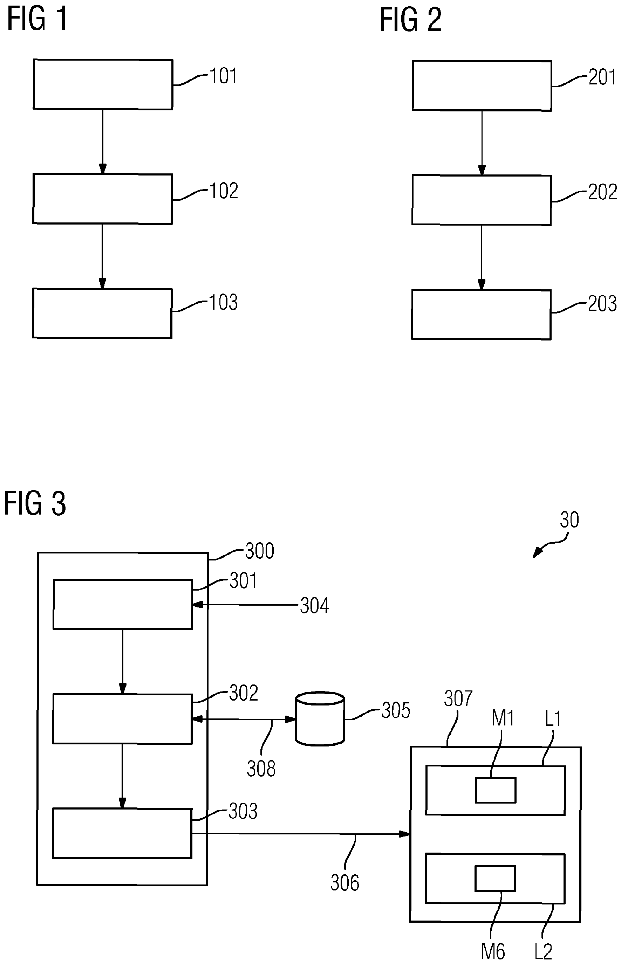

Der Energieverbrauch einer Maschine M hängt zu einem großen Teil von ihrer spezifischen Bewegung ab. Dies ist in Fig. 5 erläutert. Für denselben Bewegungspfad eines Arbeitsgangs und unterschiedliche Verfahrgeschwindigkeiten beschreibt die benötigte elektrische Leistung $E_M$ eine Funktion zur Verfahrgeschwindigkeit S. Für einen Roboter ergibt sich zum Beispiel die charakteristische Badewannenkurve in Fig. 5. Bisher benutzt ein Roboter nur die vier eingezeichneten Betriebsmodi "Aus" (501), "Standby" (502), "Leerlauf" (503) und eine einmalig festgelegte Verfahrgeschwindigkeit (504), hier 100%, für den wertschöpfenden Betrieb. Die gesamte Bandbreite an verfügbaren Geschwindigkeiten wird dabei aber zur Laufzeit nicht genutzt. Unterschiedliche Verfahrgeschwindigkeiten bedeuten aber auch unterschiedliche Produktionsleistungen $P_M$ (Performance P). Gerade im Bereich nahe der 100 % nimmt die benötigte kinetische Energie E progressiv zu. Es bietet sich zum Beispiel an, in geeigneten Situationen durch eine geringe Verminderung der Leistung P den Energieverbrauch E überdurchschnittlich stark zu senken. Diese dynamische Anpassung der Leistung P durch die Anpassung der Verfahrgeschwindigkeit von Fertigungsprozessen wird in den in Fig. 1 und 2 beschriebenen Verfahren und der Steuerungsvorrichtung 300 in Fig. 3 näher erläutert.

In dem Herstellungsverfahren von Fig. 1 wird zunächst eine solche Produktionsanlage 307 hergestellt. Hierbei wird zunächst in einem ersten Schritt 101 einer Mehrzahl von durchschnittlichen Energiebedarfsmengen E jedes Untersystems L1-L4 ermittelt. Jede der Mehrzahl von durchschnittlichen Energiebedarfsmengen E entspricht dabei vordefinierten Taktzyklen C des zumindest einen Moduls M1-M8 während der Laufzeit des technischen Systems 307. Laufzeit bezieht sich hierbei auf den wertschöpfenden Betrieb, im Gegensatz zu den Betriebsmodi "Aus" (501), "Standby" (502) und "Leerlauf" (503), wie sie oben beschrieben wurden. Anstelle eines einzigen Betriebsmodus "100%" werden nun also eine Mehrzahl von möglichen Betriebsmodi definiert.

Dazu wird in einem zweiten Schritt 102 eine Mehrzahl von Betriebszuständen V1-V5 für jedes der Mehrzahl von Untersystemen L1-L4. Jeder Betriebszustand V1-V5 legt dabei einen der vordefinierten Taktzyklen C des zumindest einen Moduls M1-M8 und ein Steuerprogramm für das zumindest eine Modul M1-M8 fest.

Diese ermittelten Betriebszustände V1-V5 werden in einem dritten Schritt 103 zusammen mit der jeweiligen Energiebedarfsmenge E für jedes Untersystem L1-L4 gespeichert.

Beim Betreiben des technischen Systems, wie es in Fig. 2 erläutert ist, kann jeder der Betriebszustände V1-V5 während der Laufzeit des technischen Systems 307 basierend auf zumindest einem Parameter ausgewählt werden. Der zumindest eine Parameter korrespondiert dabei zu zumindest einem von einer Eigenschaft der gespeicherten Betriebszustände V1-V5 und von der Energiebedarfsmenge E.

In einem ersten Schritt 201 wird dazu durch eine Steuervorrichtung 300, wie sie in Fig. 3 gezeigt ist, ein aktueller Wert 304 für den zumindest einen Parameter empfangen.

In einem zweiten Schritt 202 wird einer der gespeicherten Betriebszustände V1-V5 für jedes Untersystem L1-L4 basierend auf dem aktuellen Wert für den zumindest einen Parameter ausgewählt. Wie bereits erläutert legt der ausgewählte Betriebszustand V1-V5 für jedes der Mehrzahl von Untersystemen L1-L4 einen vordefinierten Taktzyklus C des zumindest einen Moduls M1-M8 und ein Steuerprogramm für das zumindest eine Modul M1-M8 fest. Basierend auf dem ausgewählten Betriebszustand V1-V5 wird dann die Mehrzahl von Untersystemen L1-L4 eingestellt und der Betrieb des Produktionsanlage 307 durchgeführt.

Zur Durchführung des Verfahrens von Fig. 2 kann eine Steuerungsvorrichtung 300 zum Betreiben des technischen Systems 307 eingesetzt werden. Das technische System 307 und die Steuervorrichtung 300 stellen dabei ein Gesamtsystem 30 dar. Zum Empfangen des aktuellen Werts 304 für den zumindest einen Parameter weist die Steuerungsvorrichtung 300 eine Empfangseinheit 301 auf. Der aktuelle Wert 304 kann dabei direkt eingegeben werden, beispielsweise über eine Schnittstelle, oder von extern empfangen werden.

Die Steuerungsvorrichtung weist des Weiteren eine Auswahleinheit 302 zum Auswählen eines der gespeicherten Betriebszustände V1-V5 für jedes Untersystem L1-L4 basierend auf dem aktuellen Wert für den zumindest einen Parameter auf. Die Auswahleinheit 302 kann hierzu mit einer Speichervorrichtung 305 kommunizieren (308). Diese Speichervorrichtung, in der die möglichen Betriebszustände V1-V5 gespeichert sind, kann Teil des technischen Systems 307 sein.

Die Steuerungsvorrichtung weist des Weiteren eine Einstelleinheit 303 zum Einstellen der Mehrzahl von Untersystemen (L1-L4 basierend auf den ausgewählten Betriebszuständen V1-V5 auf. Die Einstelleinheit kann ein Steuersignal 306 an das technische System 307 senden, um die entsprechenden Einstellungen vorzunehmen.

Mittels der beschriebenen Steuerungsvorrichtung 300 ist eine dynamische Anpassung des Produktionssystems 307 im laufenden Betrieb möglich. In den hochautomatisierten Fertigungsbereichen einer Automobilfabrik 307 sind dynamische Anpassungen in der Leistung gleichzusetzen mit dynamischen Anpassungen der Taktzeiten. Diese ist normalerweise innerhalb einer Produktionslinie gleich. Eine höhere Verfahrgeschwindigkeit hat eine kürze Taktzeit zur Folge. Die verschiedenen Fertigungslinien L1-L4 sind durch Puffer B1-B3 voneinander getrennt und können nun durch variable Taktzeiten einzeln gesteuert werden. Es existieren verschiedene Szenarien, in denen eine solche Anpassung Sinn ergibt. Einerseits aufgrund von Störungen des Materialflusses, wie fehlende Materialen von vorhergehenden Arbeitsgängen, vorhersehbare Engpässe an Folgestationen oder Störungen der werksübergreifenden Lieferkette. Andererseits sind auch schwankende Marktpreise oder die Anpassung zur Vermeidung von Lastspitzen denkbar.

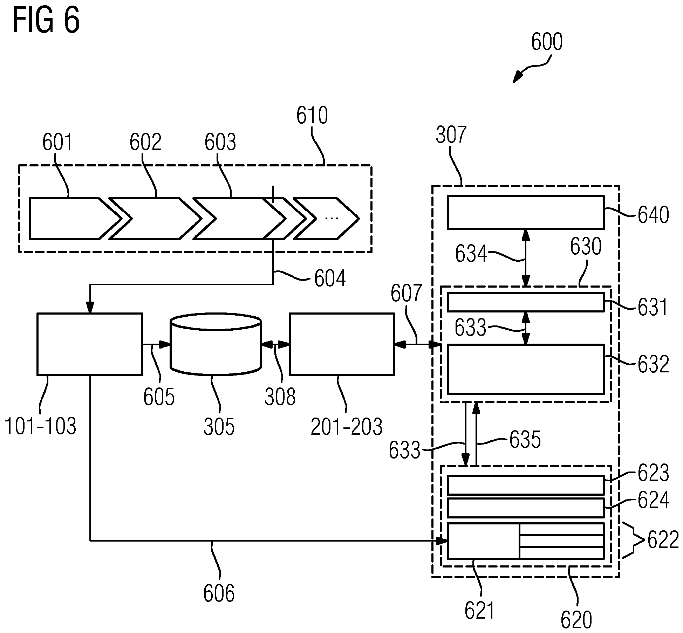

Um leistungsadaptive Fertigungsprozesse und dynamische Taktzeiten durchzuführen, wird eine Prozesslandschaft 600 verwendet, wie sie in Fig. 6 näher erläutert ist.

Innerhalb des PLM bzw. der Digitalen Fabrik 610 erfolgt nach dem Produktentwurf 601 die Produktionsplanung 603. Ein abschließender Schritt der Produktionsplanung ist die virtuelle Inbetriebnahme der Anlage. Darin werden u. a. auch Steuerprogramme 621, 623, 624 für Speicherprogrammierbare Steuerungen (SPS), Computer Numeric Controls (CNC) und Robot Controls (RC) entworfen und getestet. Dieser Vorgang benötigt viele Informationen über die beteiligten Maschinen M1-M8, Prozesse und komplexe Zusammenhänge zwischen den Maschinen M1-M8 und Maschinenkomponenten. Diese sind aber nur innerhalb der Planungssysteme 610 und nicht mehr zur Laufzeit verfügbar. Aus diesem Grund werden alternative Produktionsvarianten V1-V5 schon an dieser Stelle entworfen, um die Flexibilität der späteren Fertigungssteuerung 620, 630 zu erhöhen. Nach der Produktionsplanung (Verfahrensschritte 601-306) und der virtuellen Inbetriebnahme (PLM) 610 einer Anlage 307 werden nun alternative Produktionsvarianten bzw. Betriebszustände V1-V5 wie oben beschrieben evaluiert (101-103), nachdem die bestehenden Informationen über das Produktionssystem 307 weitergegeben wurden 604. Die Varianten V1-V5 unterscheiden sich in ihren Taktzeiten (Leistung) und in ihrem Energiebedarf. Parallel dazu werden entsprechende Steuerungsprogramme 622 erzeugt, die diese Varianten V1-V5 auf Maschinenebene abbilden. Sie werden manuell in die bestehenden Steuerungen 621, 623, 624 der Anlage 307 übertragen 606. Die entworfenen Varianten V1-V5 werden in einer Variantenbibliothek 305 abgelegt 605, um zur Laufzeit entsprechend dem aktuellen Produktionszustand von einem MES 630 abgerufen zu werden 607. Die Produktionssteuerung wird nun von einer hierarchischen Struktur aus SPS-, NC- oder RC-Steuerungen 621, 623, 624 in dem Automatisierungsabschnitt 620 des Systems 307 vorgenommen, die auch den Produktionsfortschritt in das Leitsystem 630 zurückmelden (Monitoring 635), welches im Gegenzug zu erreichende Ziele weitergibt 636.

Das Leitsystem 630 überwacht die allgemeine Produktion und Ausführung 632. Hierbei kommuniziert 633 der Ausführungsabschnitt 632 mit einer Ablaufplanung 631. Das Leitsystem kommuniziert 634 hierzu ebenfalls mit einer Einrichtung 640 zum Lieferkettenmanagement, in der allgemein die Produktion geplant wird, unter anderem basierend auf zu produzierenden Produkten und vorhandenen Mitteln.

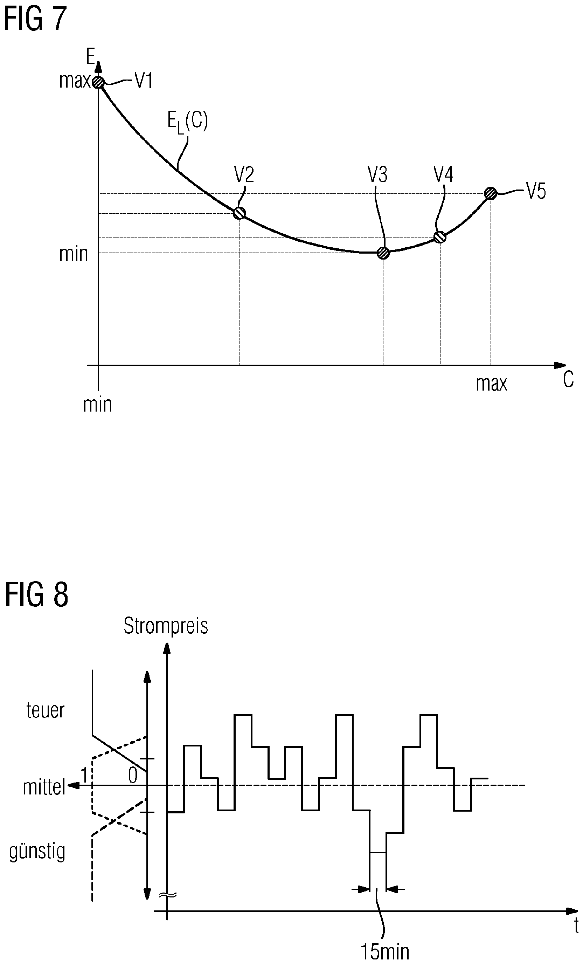

Um die Energieverbräuche auf Linienebene L1-L4 für bestimmte Taktzeiten zu ermitteln, müssen die bekannten Energieverbräuche E der einzelnen Maschinen M1-M8 einer Linie L1-L4 für eine Produktionsvariante Vi, sprich eine bestimmte Taktzeit, summiert werden. Für den Energiebedarf $E_L$ einer kompletten Fertigungslinie in Abhängigkeit zur Taktzeit C ergibt sich die Funktion in Fig. 7. Die Anzahl an möglichen Varianten V1-V5 mit unterschiedlichen Taktzeiten ist nun sehr groß. Um den Aufwand gering zu halten, werden nun Taktzeiten an den Extrema der Funktion ausgewählt (V1, V3, V5). Weitere Varianten (V2, V4) können nach der Festlegung eines Faktors $S_F$ beispielsweise mit der folgenden Gleichung bestimmt werden, um Bereiche mit großen Unterschieden im Energiebedarf abzudecken.

$$V_{neu} := E_L^{-1}\left(\frac{E_L(V_i) - E_L(V_{i+1})}{2}\right) if \, |E_L(V_i) - E_L(V_{i+1}) > SF$$

Sind die Taktzeiten pro Linie L1-L4 ermittelt, werden die Steuerungsprogramme der einzelnen Maschinen M1-M8 erstellt, sodass sie jeweils den ermittelten Taktzeiten entsprechen. Nachdem sie manuell auf die Maschinensteuerungen 621, 623, 624 übertragen wurden, kann jede Maschine M1-M8 nun verschiedene Geschwindigkeiten für ein und denselben Arbeitsgang ausführen.

Wie bereits erläutert, wird die Variantenbibliothek bzw. die Mehrzahl von Betriebszuständen V1-V5 komplett innerhalb der Planungsphase erstellt, um während der Laufzeit jederzeit zugänglich zu sein. Jeder Fertigungslinie L1-L4, jedem Arbeitsgang und jedem Produkt werden verschiedene Varianten V1-V5 mit den spezifischen Steuerprogrammen pro Maschine M1-M8 zugeordnet. Ein Beispiel hierzu ist in der unten stehenden Tabelle gezeigt. Des Weiteren werden der erwartete Energieverbrauch und Taktzeiten hinterlegt. Nicht produktive Produktionszustände werden hier nur mittels Leerlauf (idle) und der benötigten Leistung beschrieben.

| Variante | Linie | Prozess | (Maschine/Steuerprogramm) | Produkt | Energieverbrauch | Taktzyklus |
|---|---|---|---|---|---|---|
| V1 | L1 | Schweißen | (M1, CP2), (M2, CP5) | P1 | 51 kWh | 30 s |
| V2 | L1 | Schweißen | (M1, CP3), (M2, CP4) | P1 | 30 kWh | 40 s |
| V12 | L6 | Bonden | (M32, CP3) | P2 | 32 kWh | 40 s |
| V63 | L12 | Transport | (M44, CP5) | P1 | 1 kW | idle |

Eine Vielzahl weiterer Betriebszustände V1-V5 bzw. Varianten ist möglich. Die Feinplanung des MES 630 dient der Auswahl der besten Produktionsvariante V1-V5 in einem bekannten Produktionszustand innerhalb eines kurzfristigen Planungshorizonts (Produktionsprogramm, Strompreise, unerwartete Ereignisse, Warteschlangenlängen in Puffern). Durch die Einbeziehung von Energieverbräuchen E wird dieses Problem nun komplexer. Die Variantenbibliothek unterstützt dabei das MES 630 durch bekannte Produktionsvarianten V1-V5 und zusätzliche Flexibilität.

In Fig. 8 wird nun ein Beispiel einer solchen dynamischen Anpassung basierend auf einem schwankenden Strompreis erläutert. Beispielsweise kann ein intuitiver regelbasierter Ansatz gewählt werden, der auf Fuzzy-Logik beruht. Der Strompreis wird in die Kategorien "teuer", "mittel" und "günstig". Die Zugehörigkeitsfunktionen bilden diese Kategorien auf einem schwankenden Strompreis ab. Anderen Parameter, wie etwa den Pufferfüllständen, werden ebenfalls Kategorien zugewiesen. Gewissen Produktionszuständen wie beispielweise kategorisierter Strompreis, Pufferfüllstände und Linineauslastung können nun regelbasiert gewisse Produktionsvarianten V1-V5 zugeordnet werden.

Ein weiteres konkretes Ausführungsbeispiel wird nun in Zusammenhang mit dem technischen System 307 von Fig. 3 erläutert, welches eine Schweißstraße darstellt. Wie bereits erläutert werden in der Produktionsplanung u. a. die Positionen und Arbeitsgänge von Maschinen M1-M8 festgelegt. In diesem Beispiel werden insgesamt vier Fertigungslinien L1-L4 einer Schweißstraße mit drei Puffern B1-B3 voneinander getrennt. Die drei Maschinen der Linie L1 (M1, M2, M3) sind drei Roboter, die nacheinander verschiedene Arbeitsgänge am Produkt durchführen. Der Puffer B1 bildet den Übergang zu Linie L2.

Es wird angenommen, dass die Energieverbrauchskurven für jeden Roboter M1-M8 bekannt sind. Die Summierung der Kurven führt zur Ableitung der Produktionsvarianten V1, V2 und V3 bzw. der Taktzeiten 20 s, 40 s und 60 s. Anschließend erfolgt der Entwurf der Steuerungsprogramme des Roboters M1-M8, die diesen Taktzeiten entsprechen, etwa CP1, CP2 und CP3 für M1. Nach der manuellen Übertragung der Programme in die Maschinensteuerungen werden die Varianten in die Variantenbibliothek übermittelt, siehe folgende Tabelle.

| Variante | Linie | Prozess | (Maschine/Steuerprogramm) | Produkt | Energieverbrauch | Taktzyklus |
|---|---|---|---|---|---|---|
| V1 | L1 | Schweißen | (M1, CP1), (M2, CP1), (M3, CP1) | P1 | 51 kWh | 20 s |
| V2 | L1 | Schweißen | (M1, CP2), (M2, CP2), (M3, CP2) | P1 | 45 kWh | 40 s |
| V3 | L1 | Schweißen | (M1, CP3), (M2, CP3), (M3, CP3) | P1 | 40 kWh | 60 s |
| ... | | | | | | |

In dem oben beschriebenen Szenario des schwankenden Strompreises erfolgt die Auswahl der Varianten V1-V3 zur Laufzeit durch die Kategorisierung des volatilen Strompreises mittels Fuzzy-Logik. Bei einem Mittelwert von 41,82 EUR/MWh und einer Standardabweichung von 12,92 EUR/MWh wird etwa der aktuelle Strompreis von 39 EUR/MWh vollständig der Kategorie "Low-end" zugeordnet. An dieser Stelle werden vier Strompreiskategorien verwendet, wobei diese und weitere Kategorisierungen in der folgenden Tabelle dargelegt sind.

| Parameter | Kategorie | | | |
|---|---|---|---|---|
| Betriebsgeschwindigkeit | Langsam (50%) | Mittel (70%) | Schnell (90%) | Maximum (100%) |
| Strompreis | Günstig (<30 EUR/MWh) | Low-end (30-40 EUR/MWh) | High-end (40-50 EUR/MWh) | Teuer (>50 EUR/MWh) |
| Puffer-Füllstand | Leerer Puffer (<5 Einheiten) | Niedriger Puffer (5 - 9 Einheiten) | Hoher Puffer (10 - 14 Einheiten) | Voller Puffer (>14 Einheiten) |

In Abhängigkeit zum momentanen Strompreis, der momentanen Auslastung der Linie L1 und des Füllstands von Puffer B1 (WIP) kommen nun folgende Beispielregeln zur Auswahl einer Produktionsvariante V1-V3 zum Einsatz. Ist der Strompreis "Low-end", der Puffer B1 nicht in der Kategorie "Niedriger Puffer" oder "Voller Puffer", so fährt die Linie L1 die Variante V2 mit einer Taktzeit von 40 s. Ist hingegen bei ansonsten gleichen Bedingungen der Strompreis "Teuer" fährt die Linie L1 Variante V2 mit der Taktzeit von 60 s. Bei höheren Strompreisen wird also die Linie langsamer mit höheren Taktzeiten gefahren.

Basierend auf den hierin vorgeschlagenen Verfahren und Vorrichtung kann eine Erhöhung der Flexibilität hochautomatisierter Anlagen durch dynamische Taktzeitanpassungen auf Linienebene erfolgen. Taktzeitanpassungen werden wiederrum durch die geschwindigkeitsadaptive Steuerung von Fertigungsprozessen realisiert, die es erlauben den Energieverbrauch in Abhängigkeit zur Leistung aktiv zu variieren. Dadurch wird eine dynamische Steuerung und Optimierung von Energieverbräuchen bzw. der Energieeffizienz während der Wertschöpfung erst ermöglicht.

Hierbei wird das Produktionsleitsystem (MES) durch Planungstools in der Entwicklungsphase (PLM) ergänzt. Den Produktionsvarianten auf Linienebene werden konkrete Energieverbräuche zugeordnet und in einer Variantenbibliothek abgelegt, um zur Laufzeit jederzeit abrufbar zu sein. Die Auswahl der Varianten während der Produktion erfolgt beispielsweise durch eine auf Fuzzy-Logik basierende Kategorisierung des Strompreises und pufferfüllstandsabhängige Regeln, die den Produktionsvarianten zugeordnet sind.

Obwohl die vorliegende Erfindung anhand von Ausführungsbeispielen beschrieben wurde, ist sie vielfältig modifizierbar.

**Patentansprüche**

1. Herstellungsverfahren zum Herstellen eines technischen Systems (307), wobei das technische System (307) eine Mehrzahl von Untersystemen (L1-L4) mit jeweils zumindest einem Modul (M1-M8) aufweist, mit:

   Ermitteln (101) einer Mehrzahl von durchschnittlichen Energiebedarfsmengen (E) jedes Untersystems (L1-L4), wobei jede der Mehrzahl von durchschnittlichen Energiebedarfsmengen (E) vordefinierten Taktzyklen (C) des zumindest einen Moduls (M1-M8) während der Laufzeit des technischen Systems (307) entspricht,
   Ermitteln (102) einer Mehrzahl von Betriebszuständen (V1-V5) für jedes der Mehrzahl von Untersystemen (L1-L4) unter Berücksichtigung von Einstellmöglichkeiten der Module (M1-M8) jedes Untersystems (L1-L4), wobei jeder Betriebszustand (V1-V5) einen der vordefinierten Taktzyklen (C) des zumindest einen Moduls (M1-M8) und ein Steuerprogramm für das zumindest eine Modul (M1-M8) festlegt,
   Speichern (103) der ermittelten Mehrzahl von Betriebszuständen (V1-V5) zusammen mit der jeweiligen Energiebedarfsmenge (E) für jedes Untersystem (L1-L4), wobei jeder der Betriebszustände (V1-V5) während der Laufzeit des technischen Systems (307) basierend auf zumindest einem Parameter auswählbar ist, wobei der zumindest eine Parameter zu zumindest einem von einer Eigenschaft der gespeicherten Betriebszustände (V1-V5) und von der Energiebedarfsmenge (E) korrespondiert, und
   Einrichten (606) des technischen Systems (307) basierend auf der Mehrzahl von ermittelten Betriebszuständen (V1-V5), wobei einer der Mehrzahl von ermittelten Betriebszuständen (V1-V5) als Standardbetriebszustand eingerichtet ist.

2. Verfahren nach Anspruch 1, wobei das Ermitteln (101) einer Mehrzahl von durchschnittlichen Energiebedarfsmengen (E) jedes Untersystems (L1-L4) das Ermitteln einer Mehrzahl von durchschnittlichen Energiebedarfsmengen (E) jedes des zumindest einen Moduls (m1-M8) für einen vordefinierten Taktzyklus (C) und das Summieren der Energiebedarfsmenge (E) jedes des zumindest einen Moduls (M1-M8) pro Untersystem (L1-L4) aufweist.

3. Verfahren nach Anspruch 1 oder 2, wobei die Eigenschaften der gespeicherten Betriebszustände (V1-V5) zumindest eines von einer Gesamtbetriebsgeschwindigkeit jedes Untersystems (L1-L4), einer Gesamtgeschwindigkeit des technischen Systems (307) und einem zu produzierenden Produkt aufweisen.

4. Verfahren nach einem der Ansprüche 1 bis 3, wobei Eigenschaften der Energiebedarfsmenge (E) zumindest eines von einem Gesamtenergieverbrauch jedes Untersystems (L1-L4) pro Taktzyklus (C) und aktuelle Energiekosten aufweisen.

5. Verfahren nach einem der Ansprüche 1 bis 4, wobei die ermittelte Mehrzahl von Betriebszuständen (V1-V5) zusammen mit der jeweiligen Energiebedarfsmenge (E) für jedes Untersystem (L1-L4) in einer Speichervorrichtung (305) des technischen Systems (307) gespeichert wird.

6. Verfahren zum Betreiben eines technischen Systems (307), wobei das technische System (307) eine Mehrzahl von Untersystemen (L1-L4) mit jeweils zumindest einem Modul (M1-M8) aufweist, wobei eine Mehrzahl von Betriebszuständen (V1-V5) zusammen mit einer jeweiligen Energiebedarfsmenge (E) für jedes Untersystem (L1-L4) in dem technischen System (307) gespeichert sind, wobei jeder der Betriebszustände (V1-V5) während der Laufzeit des technischen Systems (307) basierend auf zumindest einem Parameter auswählbar ist, wobei der zumindest eine Parameter zu zumindest einem von einer Eigenschaft der gespeicherten Betriebszustände (V1-V5) und von der Energiebedarfsmenge (E) korrespondiert, mit:

Empfangen (201) eines aktuellen Werts für den zumindest einen Parameter,
Auswählen (202) eines der gespeicherten Betriebszustände (V1-V5) für jedes Untersystem (L1-L4) basierend auf dem aktuellen Wert für den zumindest einen Parameter, wobei der ausgewählte Betriebszustand (V1-V5) für jedes der Mehrzahl von Untersystemen (L1-L4) einen vordefinierten Taktzyklus (C) des zumindest einen Moduls (M1-M8) und ein Steuerprogramm für das zumindest eine Modul (M1-M8) festlegt und unter Berücksichtigung von Einstellmöglichkeiten der Module (M1-M8) jedes Untersystems (L1-L4) ermittelt wurde, und
Einstellen (203) der Mehrzahl von Untersystemen (L1-L4) basierend auf den ausgewählten Betriebszuständen (V1-V5), wobei einer der Mehrzahl von gespeicherten Betriebszuständen (V1-V5) als Standardbetriebszustand eingestellt ist.

7. Verfahren nach Anspruch 6, wobei das Empfangen (201) eines aktuellen Werts für den zumindest einen Parameter das Ermitteln einer Zielfunktion aufweist, wobei die Zielfunktion eine zu erreichende Eigenschaft des entsprechenden Untersystems (L1-L4) definiert.

8. Verfahren nach Anspruch 7, wobei die zu erreichende Eigenschaft zumindest eines von einer Betriebsgeschwindigkeit, einem Gesamtenergieverbrauch und Gesamtenergiekosten des jeweiligen Untersystems (L1-L4) aufweist.

9. Verfahren nach Anspruch 6 oder 7, wobei das Auswählen (202) eines der gespeicherten Betriebszustände (V1-V5) für jedes Untersystem (L1-L4) basierend auf dem aktuellen Wert für den zumindest einen Parameter das Ermitteln eines der gespeicherten Betriebszustände (V1-V5) für jedes Untersystem (L1-L4) basierend auf dem aktuellen Wert für den zumindest einen Parameter und der ermittelten Zielfunktion aufweist.

10. Verfahren nach einem der Ansprüche 8 bis 9, wobei die Zielfunktion eine zu erreichende Eigenschaft des gesamten technischen Systems (307) definiert.

11. Computerprogrammprodukt, welches auf einer programmgesteuerten Einrichtung die Durchführung eines Verfahrens nach einem der Ansprüche 1 bis 10 veranlasst.

12. Steuerungsvorrichtung (300) zum Betreiben eines technischen Systems (307), wobei das technische System (307) eine Mehrzahl von Untersystemen (L1-L4) mit jeweils zumindest einem Modul (M1-M8) aufweist, wobei eine Mehrzahl von Betriebszuständen (V1-V5) zusammen mit einer jeweiligen Energiebedarfsmenge (E) für jedes Untersystem (L1-L4) in dem technischen System (307) gespeichert sind, wobei jeder der Betriebszustände (V1-V5) während der Laufzeit des technischen Systems (307) basierend auf zumindest einem Parameter auswählbar ist, wobei der zumindest eine Parameter zu zumindest einem von einer Eigenschaft der gespeicherten Betriebszustände (V1-V5) und von der Energiebedarfsmenge (E) korrespondiert, mit:

einer Empfangseinheit (301) zum Empfangen eines aktuellen Werts für den zumindest einen Parameter,
einer Auswahleinheit (302) zum Auswählen eines der gespeicherten Betriebszustände (V1-V5) für jedes Untersystem (L1-L4) basierend auf dem aktuellen Wert für den zumindest einen Parameter, wobei der ausgewählte Betriebszustand (V1-V5) für jedes der Mehrzahl von Untersystemen (L1-L4) einen vordefinierten Taktzyklus (C) des zumindest einen Moduls (M1-M8) und ein Steuerprogramm für das zumindest eine Modul (M1-M8) festlegt und unter Berücksichtigung von Einstellmöglichkeiten der Module (M1-M8) jedes Untersystems (L1-L4) ermittelt wurde, und
einer Einstelleinheit (303) zum Einstellen der Mehrzahl von Untersystemen (L1-L4) basierend auf den ausgewählten Betriebszuständen (V1-V5), wobei einer der Mehrzahl von gespeicherten Betriebszuständen (V1-V5) als Standardbetriebszustand eingestellt ist.

13. Produktionssystem (30), mit:

einem technischen System (307), welches eine Mehrzahl von Untersystemen (L1-L4) mit jeweils zumindest einem Modul (M1-M8) aufweist, und
einer Steuerungsvorrichtung (300) nach Anspruch 12.

14. Produktionssystem (30) nach Anspruch 13,
   **dadurch gekennzeichnet,**
   **dass** das Produktionssystem (30) ein Automobilproduktionssystem ist.

**Claims**

1. Production method for producing a technical system (307), wherein the technical system (307) has a plurality of subsystems (L1-L4) each with at least one module (M1-M8), comprising:

   determining (101) a plurality of average required energy amounts (E) of each subsystem (L1-L4), wherein each of the plurality of average required energy amounts (E) corresponds to predefined clock cycles (C) of the at least one module (M1-M8) during the runtime of the technical system (307),
   determining (102) a plurality of operating states (V1-V5) for each of the plurality of subsystems (L1-L4) taking into account setting possibilities of the modules (M1-M8) of each subsystem (L1-L4), wherein each operating state (V1-V5) stipulates one of the predefined clock cycles (C) of the at least one module (M1-M8) and a control program for the at least one module (M1-M8),
   storing (103) the determined plurality of operating states (V1-V5) together with the respective required energy amount (E) for each subsystem (L1-L4), wherein each of the operating states (V1-V5) can be selected on the basis of at least one parameter during the runtime of the technical system (307), wherein the at least one parameter corresponds to at least one of a property of the stored operating states (V1-V5) and the required energy amount (E), and
   setting up (606) the technical system (307) on the basis of the plurality of determined operating states (V1-V5), wherein one of the plurality of determined operating states (V1-V5) is set up as a standard operating state.

2. Method according to Claim 1, wherein the determination (101) of a plurality of average required energy amounts (E) of each subsystem (L1-L4) comprises determining a plurality of average required energy amounts (E) of each of the at least one module (M1-M8) for a predefined clock cycle (C) and adding the required energy amount (E) of each of the at least one module (M1-M8) for each subsystem (L1-L4).

3. Method according to Claim 1 or 2, wherein the properties of the stored operating states (V1-V5) have at least one of an overall operating speed of each subsystem (L1-L4), an overall speed of the technical system (307) and a product to be produced.

4. Method according to one of Claims 1 to 3, wherein properties of the required energy amount (E) have at least one of an overall energy consumption of each subsystem (L1-L4) for each clock cycle (C) and current energy costs.

5. Method according to one of Claims 1 to 4, wherein the determined plurality of operating states (V1-V5) are stored together with the respective required energy amount (E) for each subsystem (L1-L4) in a storage apparatus (305) of the technical system (307).

6. Method for operating a technical system (307), wherein the technical system (307) has a plurality of subsystems (L1-L4) each with at least one module (M1-M8), wherein a plurality of operating states (V1-V5) are stored together with a respective required energy amount (E) for each subsystem (L1-L4) in the technical system (307), wherein each of the operating states (V1-V5) can be selected on the basis of at least one parameter during the runtime of the technical system (307), wherein the at least one parameter corresponds to at least one of a property of the stored operating states (V1-V5) and the required energy amount (E), comprising:

   receiving (201) a current value for the at least one parameter,
   selecting (202) one of the stored operating states (V1-V5) for each subsystem (L1-L4) on the basis of the current value for the at least one parameter, wherein the selected operating state (V1-V5) for each of the plurality of subsystems (L1-L4) stipulates a predefined clock cycle (C) of the at least one module (M1-M8) and a control program for the at least one module (M1-M8) and was determined taking into account setting possibilities of the modules (M1-M8) of each subsystem (L1-L4), and
   setting (203) the plurality of subsystems (L1-L4) on the basis of the selected operating states (V1-V5), wherein

**EP 3 000 004 B1**

one of the plurality of stored operating states (V1-V5) is set as a standard operating state.

7. Method according to Claim 6, wherein the reception (201) of a current value for the at least one parameter comprises determining a target function, wherein the target function defines a property of the corresponding subsystem (L1-L4) that is to be achieved.

8. Method according to Claim 7, wherein the property to be achieved comprises at least one of an operating speed, an overall energy consumption and overall energy costs of the respective subsystem (L1-L4).

9. Method according to Claim 6 or 7, wherein the selection (202) of one of the stored operating states (V1-V5) for each subsystem (L1-L4) on the basis of the current value for the at least one parameter comprises determining one of the stored operating states (V1-V5) for each subsystem (L1-L4) on the basis of the current value for the at least one parameter and the determined target function.

10. Method according to one of Claims 8 to 9, wherein the target function defines a property of the entire technical system (307) that is to be achieved.

11. Computer program product which causes a method according to one of Claims 1 to 10 to be carried out on a program-controlled device.

12. Control apparatus (300) for operating a technical system (307), wherein the technical system (307) has a plurality of subsystems (L1-L4) each with at least one module (M1-M8), wherein a plurality of operating states (V1-V5) are stored together with a respective required energy amount (E) for each subsystem (L1-L4) in the technical system (307), wherein each of the operating states (V1-V5) can be selected on the basis of at least one parameter during the runtime of the technical system (307), wherein the at least one parameter corresponds to at least one of a property of the stored operating states (V1-V5) and the required energy amount (E), having:

a receiving unit (301) for receiving a current value for the at least one parameter,
a selection unit (302) for selecting one of the stored operating states (V1-V5) for each subsystem (L1-L4) on the basis of the current value for the at least one parameter, wherein the selected operating state (V1-V5) for each of the plurality of subsystems (L1-L4) stipulates a predefined clock cycle (C) of the at least one module (M1-M8) and a control program for the at least one module (M1-M8) and was determined taking into account setting possibilities of the modules (M1-M8) of each subsystem (L1-L4), and
a setting unit (303) for setting the plurality of subsystems (L1-L4) on the basis of the selected operating states (V1-V5), wherein one of the plurality of stored operating states (V1-V5) is set as a standard operating state.

13. Production system (30) having:

a technical system (307) having a plurality of subsystems (L1-L4) each with at least one module (M1-M8), and
a control apparatus (300) according to Claim 12.

14. Production system (30) according to Claim 13,
**characterized**
**in that** the production system (30) is an automobile production system.

## Revendications

1. Procédé de fabrication pour la fabrication d'un système technique (307), dans lequel le système technique (307) comprend une pluralité de sous-systèmes (L1 à L4) avec respectivement au moins un module (Ml à M8), avec :

la détermination (101) d'une pluralité de quantités de demande énergétique (E) moyennes de chaque sous-système (L1 à L4), dans lequel chaque élément de la pluralité de quantités de demande énergétique (E) moyennes se conforme à des cycles d'horloge (C) prédéfinis de l'au moins un module (Ml à M8) pendant la durée de marche du système technique (307),
la détermination (102) d'une pluralité d'états de fonctionnement (V1 à V5) pour chaque élément de la pluralité de sous-systèmes (L1 à L4) avec prise en compte de possibilités de réglage des modules (Ml à M8) de chaque sous-système (L1 à L4), dans lequel chaque état de fonctionnement (V1 à V5) fixe l'un des cycles d'horloge (C) prédéfinis de l'au moins un module (MI à M8) et un programme de commande pour l'au moins un module (MI à M8), la mémorisation (103) de la pluralité déterminée d'états de fonctionnement (V1 à V5) conjointement avec la quantité de demande énergétique (E) respective pour chaque sous-système (L1 à L4), dans lequel chacun des états de fonctionnement (V1 à V5) est sélectionnable pendant la durée de marche du système technique (307) sur la base d'au moins un paramètre, dans lequel l'au moins un paramètre correspond à au moins un élément parmi une propriété des états de fonctionnement (V1 à V5) mémorisés et la quantité de demande énergétique (E), et

la conception (606) du système technique (307) sur la base de la pluralité d'états de fonctionnement (V1 à V5) déterminés, dans lequel un élément de la pluralité d'états de fonctionnement (V1 à V5) déterminés est conçu sous la forme d'un état de fonctionnement standard.

2.  Procédé selon la revendication 1, dans lequel la détermination (101) d'une pluralité de quantités de demande énergétique (E) moyennes de chaque sous-système (L1 à L4) comprend la détermination d'une pluralité de quantités de demande énergétique (E) moyennes de chacun de l'au moins un module (MI à M8) pour un cycle d'horloge (C) prédéfini et l'addition de la quantité de demande énergétique (E) de chacun de l'au moins un module (MI à M8) par sous-système (L1 à L4).

3.  Procédé selon la revendication 1 ou la revendication 2, dans lequel les propriétés des états de fonctionnement (V1 à V5) mémorisés comprennent au moins un élément parmi une vitesse de fonctionnement globale de chaque sous-système (L1 à L4), une vitesse globale du système technique (307) et un produit à produire.

4.  Procédé selon l'une des revendications 1 à 3, dans lequel des propriétés de la quantité de demande énergétique (E) comprennent au moins un élément parmi une consommation énergétique globale de chaque sous-système (L1 à L4) par cycle d'horloge (C) et des coûts énergétiques actuels.

5.  Procédé selon l'une des revendications 1 à 4, dans lequel la pluralité déterminée d'états de fonctionnement (V1 à V5) est mémorisée conjointement avec la quantité de demande énergétique (E) respective pour chaque sous-système (L1 à L4) dans un dispositif de mémorisation (305) du système technique (307).

6.  Procédé pour le fonctionnement d'un système technique (307), dans lequel le système technique (307) comprend une pluralité de sous-systèmes (L1 à L4) avec respectivement au moins un module (M1 à M8), dans lequel une pluralité d'états de fonctionnement (V1 à V5) est mémorisée conjointement avec une quantité de demande énergétique (E) respective pour chaque sous-système (L1 à L4) dans le système technique (307), dans lequel chacun des états de fonctionnement (V1 à V5) est sélectionnable pendant la durée de marche du système technique (307) sur la base d'au moins un paramètre, dans lequel l'au moins un paramètre correspond à au moins un élément parmi une propriété des états de fonctionnement (V1 à V5) mémorisés et la quantité de demande énergétique (E), avec :

    la réception (201) d'une valeur actuelle pour l'au moins un paramètre,
    la sélection (202) de l'un des états de fonctionnement (V1 à V5) mémorisés pour chaque sous-système (L1 à L4) sur la base de la valeur actuelle pour l'au moins un paramètre, dans lequel l'état de fonctionnement (V1 à V5) sélectionné pour chaque élément de la pluralité de sous-systèmes (L1 à L4) fixe un cycle d'horloge (C) prédéfini de l'au moins un module (MI à M8) et un programme de commande pour l'au moins un module (MI à M8) et a été déterminé avec prise en compte de possibilités de réglage des modules (MI à M8) de chaque sous-système (L1 à L4), et
    le réglage (203) de la pluralité de sous-systèmes (L1 à L4) sur la base des états de fonctionnement (V1 à V5) sélectionnés, dans lequel un élément de la pluralité d'états de fonctionnement (V1 à V5) mémorisés est réglé sous la forme d'un état de fonctionnement standard.

7.  Procédé selon la revendication 6, dans lequel la réception (201) d'une valeur actuelle pour l'au moins un paramètre comprend la détermination d'une fonction cible, dans lequel la fonction cible définit une propriété à atteindre du sous-système (L1 à L4) correspondant.

8.  Procédé selon la revendication 7, dans lequel la propriété à atteindre comprend au moins un élément parmi une vitesse de fonctionnement, une consommation énergétique globale et des coûts énergétiques globaux du sous-système (L1 à L4) respectif.

9.  Procédé selon la revendication 6 ou la revendication 7, dans lequel la sélection (202) de l'un des états de fonctionnement (V1 à V5) mémorisés pour chaque sous-système (L1 à L4) sur la base de la valeur actuelle pour l'au moins un paramètre comprend la détermination de l'un des états de fonctionnement (V1 à V5) mémorisés pour chaque sous-système (L1 à L4) sur la base de la valeur actuelle pour l'au moins un paramètre et de la fonction cible déterminée.

10. Procédé selon l'une des revendications 8 à 9, dans lequel la fonction cible définit une propriété à atteindre du système technique (307) global.

11. Produit de programme informatique, lequel provoque sur un dispositif commandé par programme la mise en œuvre d'un procédé selon l'une des revendications 1 à 10.

12. Dispositif de commande (300) pour le fonctionnement d'un système technique (307), dans lequel le système technique (307) comprend une pluralité de sous-systèmes (L1 à L4) avec respectivement au moins un module (MI à M8), dans lequel une pluralité d'états de fonctionnement (V1 à V5) est mémorisée conjointement avec une quantité de demande énergétique (E) respective pour chaque sous-système (L1 à L4) dans le système technique (307), dans lequel chacun des états de fonctionnement (V1 à V5) est sélectionnable pendant la durée de marche du système technique (307) sur la base d'au moins un paramètre, dans lequel l'au moins un paramètre correspond à au moins un élément parmi une propriété des états de fonctionnement (V1 à V5) mémorisés et la quantité de demande énergétique (E), avec :

une unité de réception (301) pour la réception d'une valeur actuelle pour l'au moins un paramètre,
une unité de sélection (302) pour la sélection de l'un des états de fonctionnement (V1 à V5) mémorisés pour chaque sous-système (L1 à L4) sur la base de la valeur actuelle pour l'au moins un paramètre, dans lequel l'état de fonctionnement (V1 à V5) sélectionné pour chaque élément de la pluralité de sous-systèmes (L1 à L4) fixe un cycle d'horloge (C) prédéfini de l'au moins un module (MI à M8) et un programme de commande pour l'au moins un module (MI à M8) et a été déterminé avec prise en compte de possibilités de réglage des modules (M1 à M8) de chaque sous-système (L1 à L4), et
une unité de réglage (303) pour le réglage de la pluralité de sous-systèmes (L1 à L4) sur la base des états de fonctionnement (V1 à V5) sélectionnés, dans lequel un élément de la pluralité d'états de fonctionnement (V1 à V5) mémorisés est réglé sous la forme d'un état de fonctionnement standard.

13. Système de production (30), avec :

un système technique (307), lequel comprend une pluralité de sous-systèmes (L1 à L4) avec respectivement au moins un module (MI à M8), et
un dispositif de commande (300) selon la revendication 12.

14. Système de production (30) selon la revendication 13,
**caractérisé en ce que**
le système de production (30) est un système de production automobile.

## FIG 1

101

102

103

## FIG 2

201

202

203

## FIG 3

30

300

301

304

302

305

308

307

M1

L1

303

306

M6

L2

## FIG 4

## FIG 5

FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010274377 A1

**In der Beschreibung aufgeführte Nicht-Patentliteratur**

- **WAGNER, E.** Vorhersageschafteinsparungen, KEM. August 2012